# EUROPEAN PATENT APPLICATION

(11) **EP 4 851 941 A1**
(43) Date of publication of application: **09.12.2026**
(21) Application number: 26183091.3
(22) Date of filing: 04.06.2026
(51) Int. Cl.: G06T 19/00, G06T 19/20

(54) **RENDERING MULTI-LAYER IMAGES WITH PARTIALLY OCCLUDED INSERTED CONTENT**

(30) Priority: 06.06.2025 US 202563819467 P; 02.06.2026 US 202619695354
(71) Applicant: Apple Inc., Cupertino, CA 95014 (US)
(72) Inventor: TAGHAVI NASRABADI, Afshin, Cupertino, 95014 (US); NOORKAMI, Maneli, Cupertino, 95014 (US); ALEKSIEV, Nikolay G, Cupertino, 95014 (US)
(74) Representative: Zacco Denmark A/S

(57) **Abstract**

Multi-layer images include textures with associated alpha transparency values for each of multiple layers of the multi-layer images. Additional content is inserted between layers of the multi-layer image and rendered to appear as if the additional content is included at a particular depth of the multi-layer content. The inserted content may occlude portions of the multi-layer content and may also be occluded by other portions of the multi-layer content.

## Description

### BACKGROUND

### Priority Claim

This application claims benefit of priority to U.S. Provisional Application Serial No. 63/819,467, entitled "Rendering Multi-Layer Images with Partially Occluded Inserted Content", filed June 6, 2025, and which is incorporated herein by reference in its entirety.

### Technical Field

This disclosure relates generally to systems and methods for generating, modifying, and rendering multiple layer images.

### Description of the Related Art

Multi-layer images include multiple layers that are placed at multiple depth locations relative to a viewpoint for viewing the multi-layer images. Each layer includes a texture, such as red-blue-green (RGB) values (or other attributes), associated with objects located at the respective depths represented by the respective layers. Also, each layer includes alpha transparency values indicating a degree to which transparency is to be applied to the respective texture values when compositing the respective layers into a rendered view of the multi-layer image from a given viewpoint selected for viewing the multi-layer image.

### SUMMARY

Multi-layer images, such as multi-plane images (MPIs), multi-cube images (MCIs), multi-sphere images (MSIs), or other multi-layer images (MXIs) are used to depict three-dimensional (3D) scenes using discrete layers that are separated from one another in a depth direction. Each layer includes attributes, such as texture attributes (e.g., RGB values), and alpha transparency values, wherein the alpha transparency values indicate an amount of transparency to be applied to corresponding attributes when compositing the layers into a composited image for viewing the multi-layer image.

Multi-layer images are useful for viewing a 3D scene from within a viewing volume. For example, a multi-layer image may be generated and used for repeated viewing of a 3D scene from various novel viewpoints within a viewing volume. In some cases, the viewing volume (e.g., limited headbox) may correspond to a volume within which a user of a head-mounted display (HMD) may move their head or eyes when viewing the 3D scene. Instead of having to generate a new rendering of the 3D scene using a full 3D representation each time the user changes the viewpoint from which they are viewing the 3D scene, such as a full rendering from a mesh representation or a full rendering from a point cloud representation, the 3D representation may first be converted into a multi-layer image, and the multi-layer image may then be repeatedly used to provide novel renderings of the 3D scene as the user changes the viewpoint from which they are viewing the 3D scene within the viewing volume. Said another way, within the viewing volume, the multi-layer image may be used to display renderings of the 3D scene from various novel viewpoints within the viewing volume, for example without having to use the original 3D representation (e.g. mesh, point cloud, etc.) when rendering the novel viewpoint views of the 3D scene. This approach reduces computational complexity and extends battery life of the rendering device.

In some embodiments, content may be inserted between layers of the multi-layer image and may partially occlude background layer while also being partially occluded by foreground layers. The amounts of occlusion may vary as a viewer views the multi-layer image with inserted content from differing novel viewpoints within the viewing volume. For example, a clock time may be inserted between a background portion and a foreground portion of a multi-layer image. The background and foreground may appear differently when viewed from different viewpoints within the viewing volume giving the viewer a parallax effect. Also, an amount to which the foreground occludes the inserted content may change as the viewpoint is changed. Likewise, the background occluded by the inserted content may change as the viewpoint is changed.

In some embodiments, the layers to be included in the foreground relative to the inserted content and the layers to be included in the background relative to the inserted content may be determined based on a depth at which the inserted content is to be placed. For example, layers nearer the viewer than the depth location where the content is to be inserted are included in the foreground and layers behind the depth location where the content is to be inserted are included in the background.

In some embodiments, three renderings are performed, a rendering of the foreground layers of the multi-layer image, a rendering of the background layers of the multi-layer image, and a rendering of the content to be inserted. A compositor then combines the three renderings to create a mixed scene (that includes the multi-layer image content and the inserted content) for display.

In some embodiments, the content may be directly inserted when rendering the multi-layer image by altering the content of the layers of the multi-layer image to include the inserted content and/or by adding additional layers to the multi-layer image that include the inserted content.

In some embodiments, the multi-layer image may be used as a background in extended reality (XR) content and the inserted content may be objects in the extended reality that move in front of the background. This technique may enable a full immersion experience for a user of a device, such as a head-mounted display (HMD) while taking advantage of reduced power consumption benefits of using multi-layer images for rendering multiple viewpoints of a scene from within a limited headbox.

In some embodiments, a computer-readable medium stores program instructions that, when executed, cause one or more processors to access a multi-layer image, access content to be inserted in the multi-layer image, render a first depth portion of the multi-layer image, render the content to be inserted in the multi-layer image, and render a second depth portion of the multi-layer image. The program instructions further cause the one or more processors to composite the first rendered depth portion with the rendered content and the second rendered depth portion, wherein the first or second depth portion occludes a portion of the inserted content, and wherein an amount of occlusion of the inserted content depends on a viewpoint from which the multi-layer image is being rendered with the inserted content.

### BRIEF DESCRIPTION OF THE DRAWINGS

FIG. 1 illustrates a side view of a multi-layer image that includes multiple layers at different depths relative to a limited headbox, according to some embodiments.
FIG. 2 illustrates a frontal view of a multi-layer image that includes multiple layers at different depths relative to a viewing volume as well as illustrating composited renderings of the multi-layer image from a reference viewpoint and a novel viewpoint, wherein content is inserted between layers of the multi-layer image, according to some embodiments.
FIG. 3 is a side view of the multi-layer image showing content being inserted between layers, according to some embodiments.
FIG. 4 illustrates a multi-layer renderer that supports insertion of content, according to some embodiments.
FIG. 5 illustrates an extended reality use of multi-layer images, wherein content is inserted in a foreground and the multi-layer image provides an immersive background, according to some embodiments.
FIG. 6 is a flowchart illustrating a method of rendering multi-layer images with inserted content, according to some embodiments.
FIG. 7A illustrates a multi-plane image, which is a type of multi-layer image into which content may be inserted, according to some embodiments.
FIG. 7B illustrates a multi-cube image, which is a type of multi-layer image into which content may be inserted, according to some embodiments.
FIG. 7C illustrates a multi-sphere image, which is a type of multi-layer image into which content may be inserted, according to some embodiments.
FIG. 8A is a side view of a headset-type head-mounted device, according to some embodiments.
FIG. 8B is a front view of a headset-type head-mounted device, according to some embodiments.
FIG. 8C a front view of a glasses-type head-mounted device, according to some embodiments.
FIG. 9 a block diagram illustrating components of a head-mounted device, according to some embodiments.
FIG. 10 is a block diagram illustrating an example computing device that may be used, according to some embodiments.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

"Comprising." This term is open-ended. As used in the claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured To." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware - for example, circuits, memory storing program instructions executable to implement the operation, etc. Reciting that a unit/circuit/component is "configured to" perform one or more tasks is expressly intended not to invoke 35 U.S.C. § 112, paragraph (f), for that unit/circuit/component. Additionally, "configured to" can include generic structure (e.g., generic circuitry) that is manipulated by software or firmware (e.g., an FPGA or a general-purpose processor executing software) to operate in manner that is capable of performing the task(s) at issue. "Configure to" may also include adapting a manufacturing process (e.g., a semiconductor fabrication facility) to fabricate devices (e.g., integrated circuits) that are adapted to implement or perform one or more tasks.

### DETAILED DESCRIPTION

Multi-layer images, such as multi-plane images (MPIs), multi-cube images (MCIs), multi-sphere images (MSIs), or other multi-layer images (MXIs) are used to depict three-dimensional (3D) scenes using discrete layers that are separated from one another in a depth direction. Each layer includes attributes, such as texture attributes (e.g., RGB values), and alpha transparency values, wherein the alpha transparency values indicate an amount of transparency to be applied to corresponding attributes when compositing the layers into a composited image for viewing the multi-layer image.

Multi-layer images are useful for viewing a 3D scene from within a viewing volume. For example, a multi-layer image may be generated and used for repeated viewing of a 3D scene from various novel viewpoints within a viewing volume. In some cases, the viewing volume (e.g., limited headbox) may correspond to a volume within which a user of a head-mounted display (HMD) may move their head or eyes when viewing the 3D scene. Instead of having to generate a new rendering of the 3D scene using a full 3D representation each time the user changes the viewpoint from which they are viewing the 3D scene, such as a full rendering from a mesh representation or a full rendering from a point cloud representation, the 3D representation may first be converted into a multi-layer image, and the multi-layer image may then be repeatedly used to provide novel renderings of the 3D scene as the user changes the viewpoint from which they are viewing the 3D scene within the viewing volume. Said another way, within the viewing volume, the multi-layer image may be used to display renderings of the 3D scene from various novel viewpoints within the viewing volume, for example without having to use the original 3D representation (e.g. mesh, point cloud, etc.) when rendering the novel viewpoint views of the 3D scene. This approach reduces computational complexity and extends battery life of the rendering device. In some embodiments, a simplified mesh may be generated when rendering the novel viewpoint from the multi-layer image. However, the generation of the simplified mesh from the multi-layer image may be more efficient than transmitting and rendering the original 3D representation (e.g. mesh, point cloud, etc.) for each novel viewpoint.

For example, in some use cases, multi-layer images may be used as an intermediate representation, wherein an original 3D scene is converted into a multi-layer image, or is originally generated as a multi-layer image, for example using a 3D gaussian splatting technique. The multi-layer image may then be used to generate a mesh and textures. A further rendering step may then include rendering an image to display from the generated mesh and textures (generated using the multi-layer image).

In some embodiments, content may be inserted between layers of the multi-layer image and may partially occlude background layer while also being partially occluded by foreground layers. The amounts of occlusion may vary as a viewer views the multi-layer image with inserted content from differing novel viewpoints within the viewing volume. For example, a clock time may be inserted between a background portion and a foreground portion of a multi-layer image. The background and foreground may appear differently when viewed from different viewpoints within the viewing volume giving the viewer a parallax effect. Also, an amount to which the foreground occludes the inserted content may change as the viewpoint is changed. Likewise, the background occluded by the inserted content may change as the viewpoint is changed.

In some embodiments, the layers to be included in the foreground relative to the inserted content and the layers to be included in the background relative to the inserted content may be determined based on a depth at which the inserted content is to be placed. For example, layers nearer the viewer than the depth location where the content is to be inserted are included in the foreground and layers behind the depth location where the content is to be inserted are included in the background.

In some embodiments, three renderings are performed: a rendering of the foreground layers of the multi-layer image, a rendering of the background layers of the multi-layer image, and a rendering of the content to be inserted. A compositor then combines the three renderings to create a mixed scene (that includes the multi-layer image content and the inserted content) for display.

For example, in some embodiments, triangles for the foreground may be rendered, the content may be inserted, and then triangles for the background may be rendered, wherein the foreground and background triangles are rendered from the multi-plane image into which the content is being inserted.

In some embodiments, the content may be directly inserted when rendering the multi-layer image by altering the content of the layers of the multi-layer image to include the inserted content and/or by adding additional layers to the multi-layer image that include the inserted content.

In some embodiments, the foreground and background for the multi-layer image may be rendered (e.g. into a mesh) with a mask used to cover where the inserted content is to be placed (e.g. in the rendered mesh). In such embodiments, the content may then be "penciled in" within the masked portion of the rendered novel view of the multi-layer image.

In some embodiments, the multi-layer image may be used as a background in extended reality (XR) content and the inserted content may be objects in the extended reality that move in front of the background. This technique may enable a full immersion experience for a user of a device, such as a head-mounted display (HMD) while taking advantage of reduced power consumption benefits of using multi-layer images for rendering multiple viewpoints of a scene from within a limited headbox.

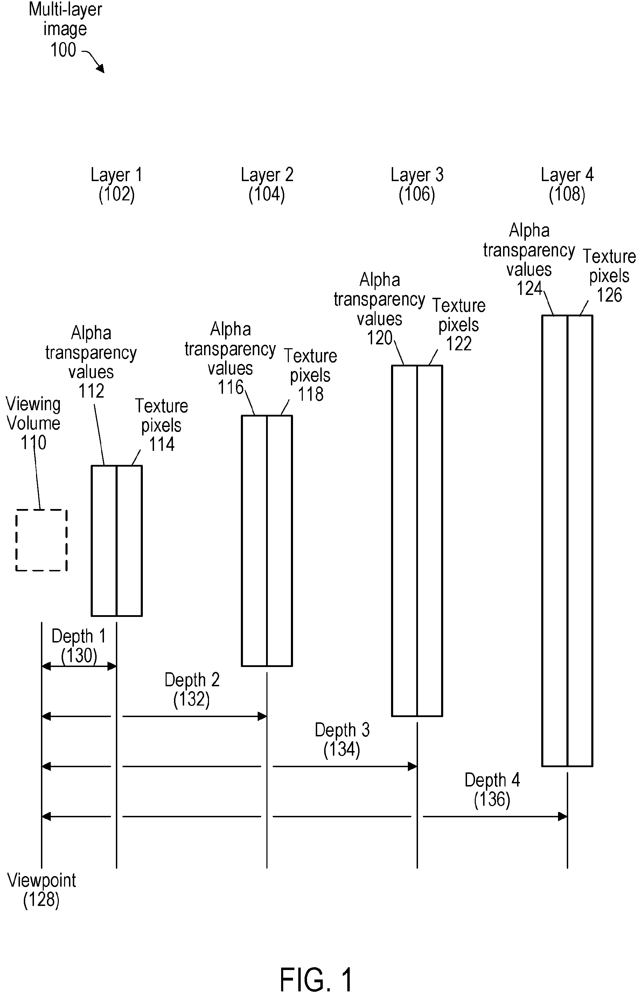

FIG. 1 illustrates a side view of a multi-layer image that includes multiple layers at different depths relative to a limited headbox, according to some embodiments.

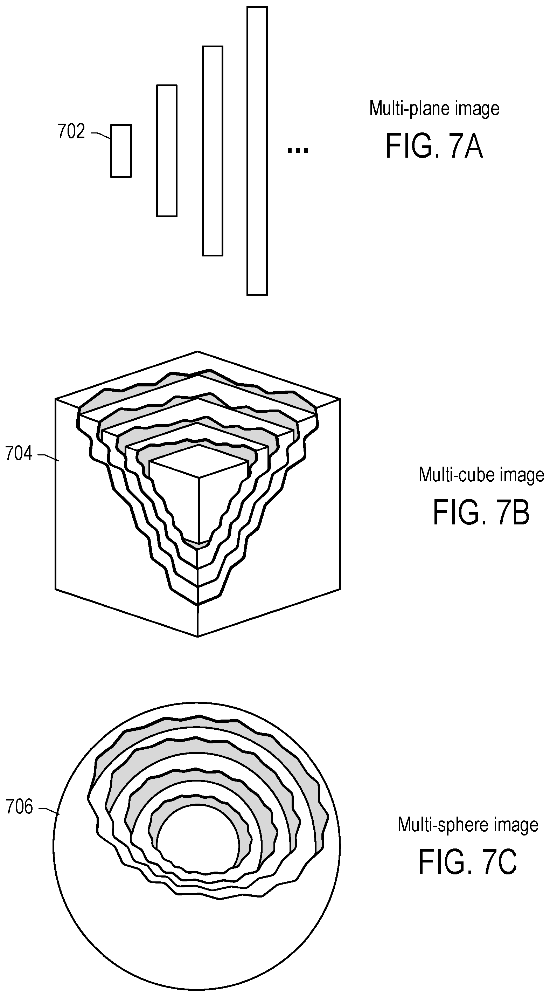

FIG. 1 illustrates an example multi-layer image 100 that is a multi-plane image, such as multi-plane image 702 shown in FIG. 7A. A multi-plane image is used for ease of description in the following discussion of FIGs. 1-6. However, it should be understood that similar techniques as described in FIGs. 1-6 are equally applicable to other types of multi-layer images, such as a multi-cube image 704, as shown in FIG. 7B and a multi-sphere image 706 as shown in FIG. 7C.

The multi-layer image 100 shown in FIG. 1 includes layer 1 (102), layer 2 (104), layer 3 (106), and layer 4 (108). Note that four layers are shown for ease of illustration, but in some embodiments a multi-layer image may include more or fewer layers than illustrated in FIG. 1. Each of the layers is located at a different depth relative to a viewing volume 110, within which a viewpoint 128 is selected for viewing the multi-layer image 100. For example, layer 1 (102) is located at depth 1 (130), layer 2 (104) is located at depth 2 (132), layer 3 (106) is located at depth 3 (134), and layer 4 (108) is located at depth 4 (136). Each of the layers includes texture pixels and associated alpha transparency values. For example, layer 1 (102) includes texture pixels 114 and alpha transparency values 112, layer 2 (104) includes texture pixels 118 and alpha transparency values 116, layer 3 (106) includes texture pixels 122 and alpha transparency values 120, and layer 4 (108) includes texture pixels 126 and alpha transparency values 124. In some embodiments, the layers may be two-dimensional (2D) RGBA images (e.g., images with red, blue, green, and alpha channels associated with each pixel). Also, other color formats, such as YCbCr, etc. may be used along with an alpha channel.

The texture values of each layer are representative of texture values of objects in a 3D scene that are located within a depth range associated with that layer. For example, objects in the depth range from the limited headbox 110 to depth 1 (130) may be included in layer 1 (102). Objects in the depth range from the end of depth 1 (130) to the end of depth 2 (132) may be included in layer 2 (104), and so on. In some embodiments, the depth intervals between each layer may vary, wherein greater depth ranges are associated with some layers and smaller depth ranges are associated with other layers. Also, in some embodiments, the depth ranges of the respective layers may overlap one another.

As discussed above, multiple novel views of a 3D scene represented by the multi-layer image 100 may be rendered from various locations or points of view within viewing volume 110.

Typically, multi-plane images are rendered from back to front. For example, in typical rendering, all of the texture pixels 126 of layer 4 (108) are rendered and the alpha transparency values 124 associated with each of the texture pixels 126 are applied to cause varying amounts of transparency to be applied to the texture pixels 126. A similar process is performed for each of the texture pixels 122 and alpha transparency values 120 of layer 3 (106), as well as for the texture pixels 118 and alpha transparency values 116 of layer 2 (104), and the texture pixels 114 and alpha transparency values 112 of layer 1 (102). Thus, all of the texture pixels 114, 118, 122, and 126 would be rendered. Also, all of the alpha transparency values 124, 120, 116, and 112 would be considered when performing blending calculations between layers. For example in a typical rendering, layer 4 (108) would be blended with layer 3 (106), then the composite layer 4 and layer 3 that was blended would be blended with layer 2, and so on.

However, such rendering may be stopped at a given depth layer where the content is to be inserted to render a background. A similar process may be performed starting the next layer after the inserted content to render a foreground. The inserted content, rendered background, and rendered foreground may then be composited to generate a rendered view of the multi-layer image that includes the inserted content at a specified depth within the multi-layer image.

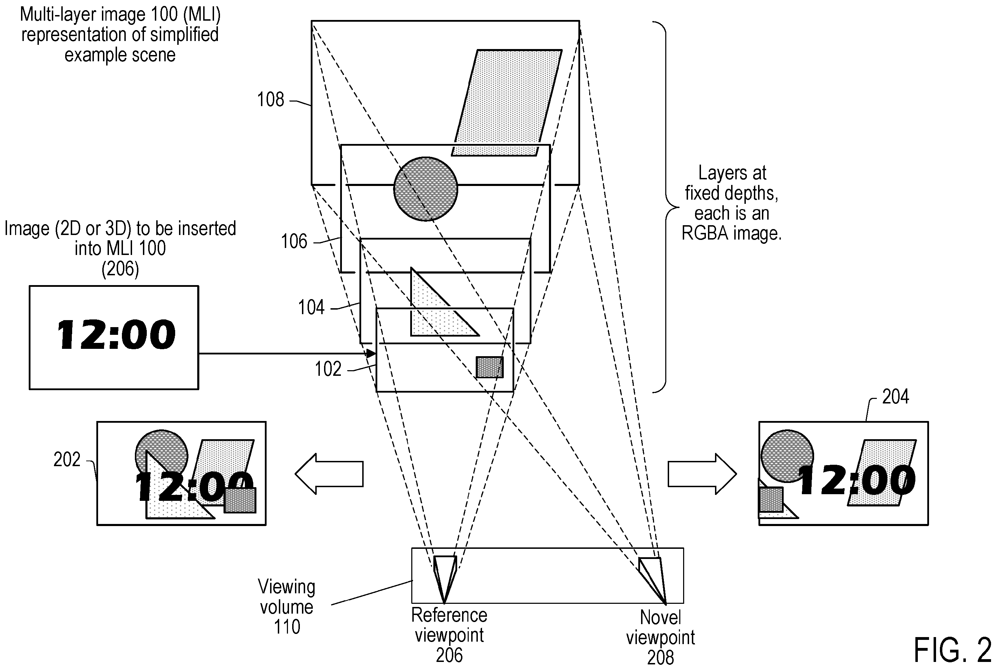

FIG. 2 illustrates a frontal view of a multi-layer image that includes multiple layers at different depths relative to a viewing volume as well as illustrating composited renderings of the multi-layer image from a reference viewpoint and a novel viewpoint, wherein content is inserted between layers of the multi-layer image, according to some embodiments.

For example, multi-layer image 100 when viewed from the front may include texture pixels representing different objects in different layers. For example, a rectangle is included in layer 102, a triangle is included in layer 104, a circle is included in layer 106, and a parallelogram is included in layer 108. Note that these shapes are used to simplify the illustration, but that in practice more complex objects, such as people, natural scenes, etc. may include objects at least partially present in respective ones of the layers. Also, the multi-layer image 100 may provide a 3D viewing effect even though it is made of multiple layers of 2D images. For example, when viewed from reference viewpoint 206 the scene may appear as shown in rendering 202. However, when the same multi-layer image 100 is viewed from novel viewpoint 208 (in limited headbox 110) the scene may appear as shown in rendering 204. Note that in rendering 202 the rectangle of layer 102 partially occludes the parallelogram of layer 108 and in rendering 204 the rectangle partially occludes the triangle of layer 104. In the two viewpoints 206 and 208 shown in FIG. 2 all texture pixels are visible in one or the other of the renderings. However, in more complex scenes some pixels may be occluded regardless of the viewpoint within limited headbox 110 from which the scene is viewed. In such situations, the fully occluded pixels may be pruned.

Also, as shown in FIG. 2, content 210 such as a 2D image or a 3D image may be inserted into the multi-layer image 100. For example, content 210 is inserted between layer 1 (102) and layer 2 (104). Also, as seen in rendered views 202 and 204, the inserted content may be occluded by the foreground objects layer 2 such as the rectangle and may occlude the background objects such as the triangle, circle, and parallelogram. Also, as can be seen as the viewpoint moves within the viewing volume 110 the degree of occlusion changes.

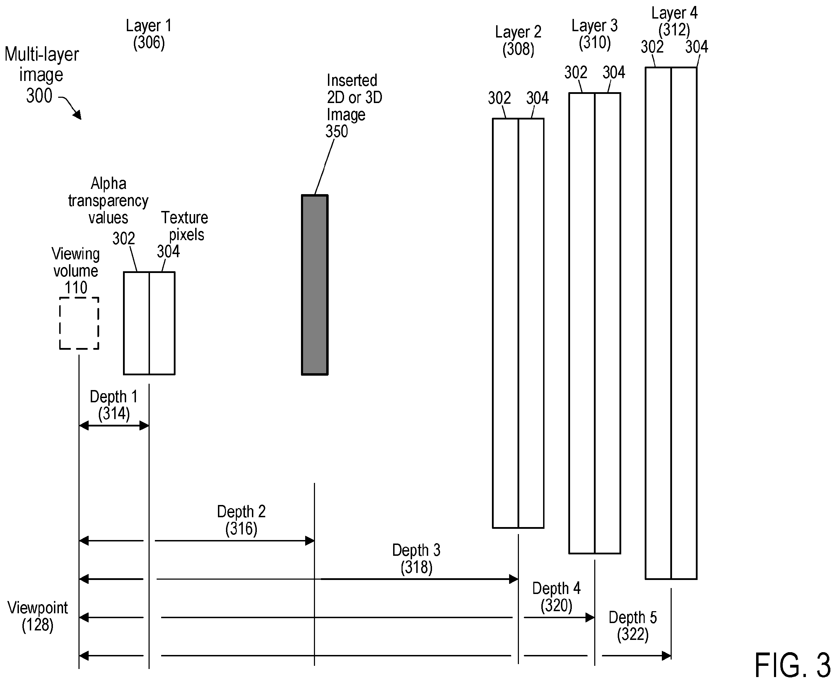

FIG. 3 is a side view of the multi-layer image showing content being inserted between layers, according to some embodiments.

For example, multi-layer image 300 includes layer 1 (306), layer 2 (308), layer 3 (310), and layer 4 (312). Each layer includes alpha transparency values 302 and texture pixels 304. As can be seen in FIG. 3, an image 350 (2D or 3D) is inserted between layer 1 (306) and layer 2 (308). For example, image 350 may have been received with instructions to insert it at depth 2 (316) which is behind layer 1 (306) located at depth 1 (314) and in front of layers 2-4, located at depths 3 (318), 4 (320), and 5 (322).

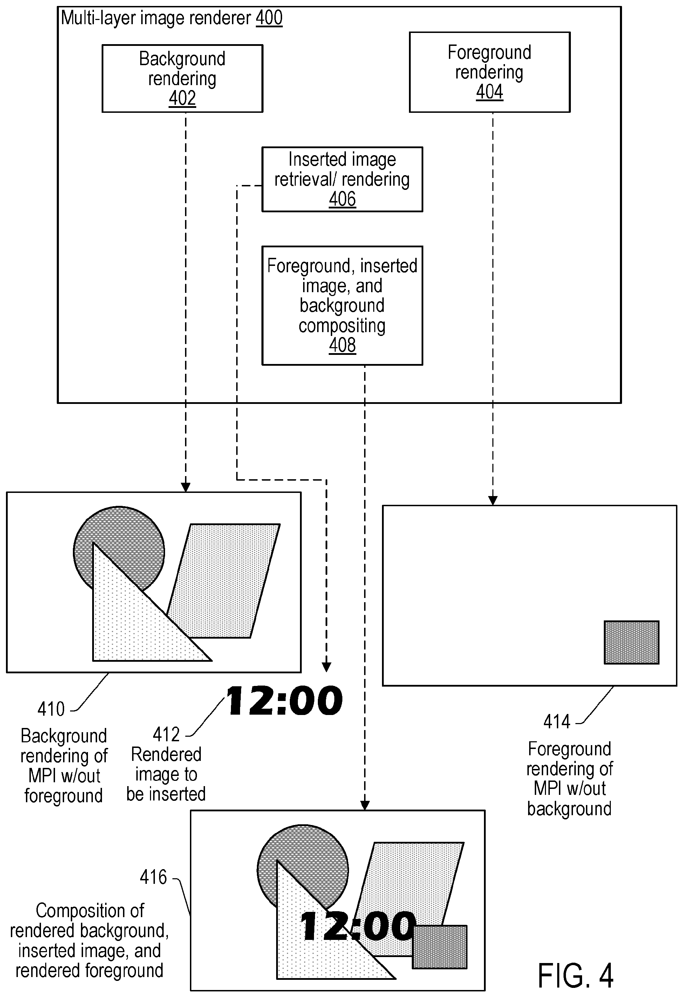

FIG. 4 illustrates a multi-layer renderer that supports insertion of content, according to some embodiments.

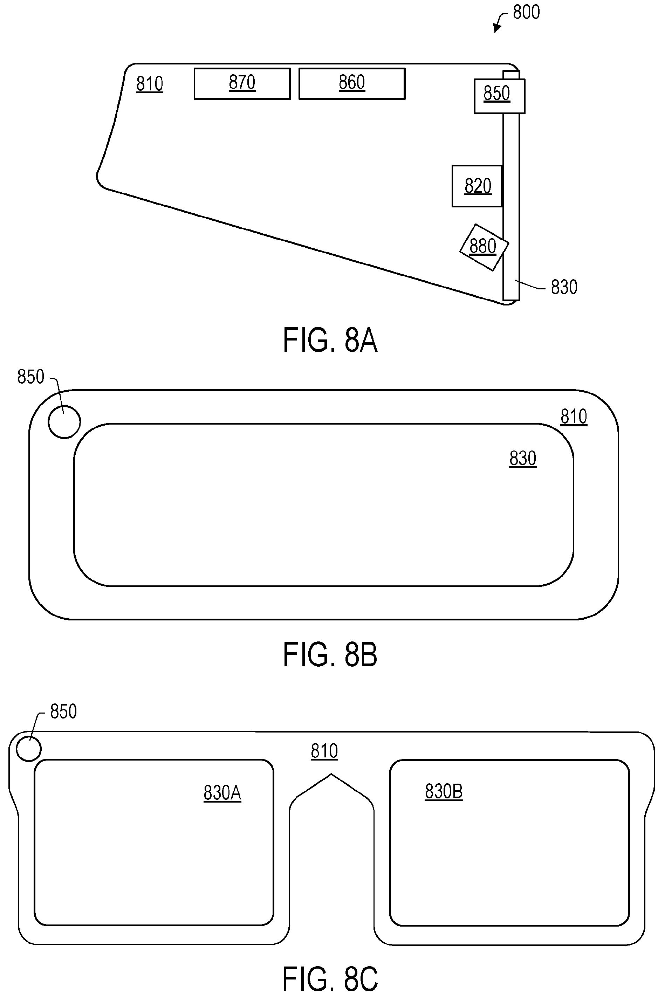

In some embodiments, multi-layer image renderer 400 may be implemented on any of the devices described in FIGs. 8A-10. Multi-layer image renderer 400 includes a background rendering process 402 that renders a multi-layer image, such as multi-layer image 100 or multi-layer image 300 from the back of the multi-layer image up to a point where the additional content is to be inserted. For example, background rendering 410 of multi-layer image 100 or 300 is shown in FIG. 4. Also, foreground rendering process 404 renders the multi-layer image starting at the next layer after where the background rendering process 402 stopped. For example, FIG. 4 illustrates foreground rendering 414 of multi-layer image 100 or 300. Also, a rendering process 406 is performed to render the content to be inserted, such as rendered content 412. Note that the rendered content 412 may be dynamic whereas the multi-layer image being rendered is static (other than being changed due to changes in viewpoint). For example, the clock may dynamically change as the time passes while the multi-layer image of a scene may remain static. Finally, compositor 408 composites the rendered foreground, background and inserted content to generate a rendered view 416 that includes the inserted content inserted at a specified depth of the multi-layer image.

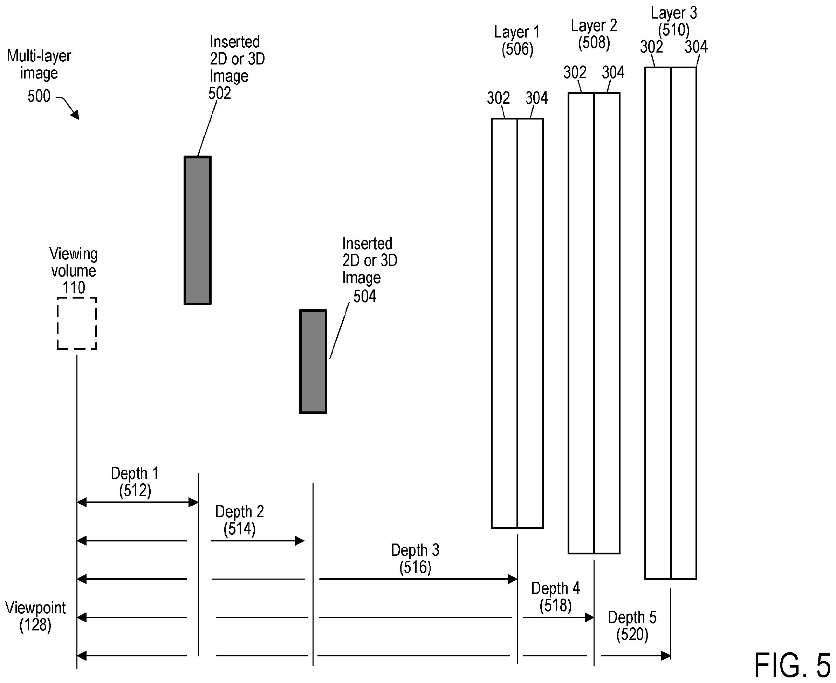

FIG. 5 illustrates an extended reality use of multi-layer images, wherein content is inserted in a foreground and the multi-layer image provides an immersive background, according to some embodiments.

In some embodiments, such as in multi-layer image 500 shown in FIG. 5, the multi-layer image may function as an immersive background for extended reality (XR) content, wherein other images of the XR content, such as inserted images 502 and 504 move relative to the background formed by layers 1 (506), 2 (508), and 3 (510). Also, the inserted content may include multiple images at different depths. For example, inserted image 502 is at depth 1 (512) and inserted image 504 is at depth 2 (514). Also, the other layers 1-3 of the multi-layer image may be at depths behind (or in front of) the inserted images 502 and 504. For example, layer 1 (506) is at depth 3 (516), layer 2 (508) is at depth 4 (518), and layer 3 (510) is at depth 5 (520).

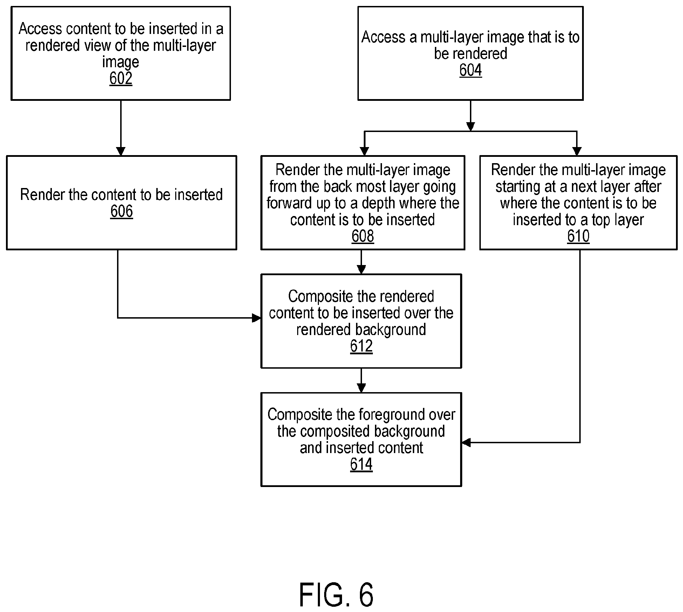

FIG. 6 is a flowchart illustrating a method of rendering multi-layer images with inserted content, according to some embodiments.

At block 602, content to be inserted into a multi-layer image is accessed, such as the clock image shown in FIGs. 2 and 4. At block 604 the multi-layer image into which the content will be inserted is accessed, such as multi-layer image 100, 300, or 500. At block 606 the content to be inserted is rendered. At block 608, the background portion of the multi-layer image is rendered, such as background portion 410 shown in FIG. 4. At block 610, the foreground portion of the multi-layer image is rendered, such as foreground portion 414 shown in FIG. 4.

At block 612 the rendered content from block 606 is composited with the rendered background from block 608. Also, at block 614 the composition resulting from block 612 is further composited with the foreground rendered at block 610.

FIG. 7A illustrates a multi-plane image, which is a type of multi-layer image into which content may be inserted, according to some embodiments. For example, multi-plane image 702 includes multiple parallel planes each located at a different distance in a depth direction.

FIG. 7B illustrates a multi-cube image, which is a type of multi-layer image into which content may be inserted, according to some embodiments. For example, multi-cube image 704 includes cubes inside of one another, wherein the walls of the cubes are located at different depth locations relative to a point of view (e.g. viewing volume) located within the innermost cube.

FIG. 7C illustrates a multi-sphere image, which is a type of multi-layer image into which content may be inserted, according to some embodiments. For example, multi-sphere image 706 includes spheres inside of one another, wherein the walls of the spheres are located at different depth locations relative to a point of view (e.g. viewing volume) located within the innermost sphere.

FIG. 8A is a side view of a headset-type head-mounted device, according to some embodiments.

Note that the HMDs 800 as illustrated in FIGS. 8A through 8C are given by way of example, and are not intended to be limiting. In various embodiments, the shape, size, and other features of an HMD 800 may differ, and the locations, numbers, types, and other features of the components of an HMD 800 may vary. FIG. 8A shows a side view of an example HMD 800, and FIGS. 8B and 8C show alternative front views of example HMDs 800, with FIG. 8B showing device that has one lens 830 that covers both eyes and FIG. 8C showing a device that has right 830A and left 830B lenses.

HMD 800 may include lens(es) 830, mounted in a wearable housing or frame 810. HMD 800 may be worn on a user's head (the "wearer") so that the lens(es) is disposed in front of the wearer's eyes. In some embodiments, an HMD 800 may implement any of various types of display technologies or display systems. For example, HMD 800 may include a display system that directs light that forms images (virtual content) through one or more layers of waveguides in the lens(es) 830; output couplers of the waveguides (e.g., relief gratings or volume holography) may output the light towards the wearer to form images at or near the wearer's eyes. As another example, HMD 800 may include a direct retinal projector system that directs light towards reflective components of the lens(es); the reflective lens(es) is configured to redirect the light to form images at the wearer's eyes.

In some embodiments, HMD 800 may also include one or more sensors that collect information about the wearer's environment (video, depth information, lighting information, etc.) and about the wearer (e.g., eye or gaze tracking sensors, head motion sensors, etc.). The sensors may include one or more of, but are not limited to one or more eye tracking cameras 820 (e.g., infrared (IR) cameras) that capture views of the user's eyes, one or more world-facing or PoV cameras 850 (e.g., RGB video cameras) that can capture images or video of the real-world environment in a field of view in front of the user, and one or more ambient light sensors that capture lighting information for the environment. Cameras 820 and 850 may be integrated in or attached to the frame 810. HMD 800 may also include one or more light sources 880 such as LED or infrared point light sources that emit light (e.g., light in the IR portion of the spectrum) towards the user's eye or eyes.

A controller 860 for the XR system may be implemented in the HMD 800, or alternatively may be implemented at least in part by an external device (e.g., a computing system or handheld device) that is communicatively coupled to HMD 800 via a wired or wireless interface. Controller 860 may include one or more of various types of processors, image signal processors (ISPs), graphics processing units (GPUs), coder/decoders (codecs), system on a chip (SOC), CPUs, and/or other components for processing and rendering video and/or images. In some embodiments, controller 860 may render and composite frames (each frame including a left and right image) that include virtual content based at least in part on inputs obtained from the sensors and from an eye tracking system, and may provide the frames to the display system.

Memory 870 for the XR system may be implemented in the HMD 800, or alternatively may be implemented at least in part by an external device (e.g., a computing system) that is communicatively coupled to HMD 800 via a wired or wireless interface. The memory 870 may, for example, be used to record video or images captured by the one or more cameras 850 integrated in or attached to frame 810. Memory 870 may include any type of memory, such as dynamic random-access memory (DRAM), synchronous DRAM (SDRAM), double data rate (DDR, DDR2, DDR3, etc.) SDRAM (including mobile versions of the SDRAMs such as mDDR3, etc., or low power versions of the SDRAMs such as LPDDR2, etc.), RAMBUS DRAM (RDRAM), static RAM (SRAM), etc. In some embodiments, one or more memory devices may be coupled onto a circuit board to form memory modules such as single inline memory modules (SIMMs), dual inline memory modules (DIMMs), etc. Alternatively, the devices may be mounted with an integrated circuit implementing system in a chip-on-chip configuration, a package-on-package configuration, or a multi-chip module configuration. In some embodiments DRAM may be used as temporary storage of images or video for processing, but other storage options may be used in an HMD to store processed data, such as Flash or other "hard drive" technologies. This other storage may be separate from the externally coupled storage mentioned below. In some embodiments the memory may store program instructions for implementing the techniques described above in FIGs. 1-7.

Embodiments of an HMD 800 as illustrated in FIGS. 8A-8C may, for example, be used in augmented or mixed (AR) applications to provide augmented or mixed reality views to the wearer. HMD 800 may include one or more sensors, for example located on external surfaces of the HMD 800, that collect information about the wearer's external environment (video, depth information, lighting information, etc.); the sensors may provide the collected information to controller 860 of the XR system. The sensors may include one or more visible light cameras 850 (e.g., RGB video cameras) that capture video of the wearer's environment that, in some embodiments, may be used to provide the wearer with a virtual view of their real environment. In some embodiments, video streams of the real environment captured by the visible light cameras 850 may be processed by the controller 860 of the HMD 800 to render augmented or mixed reality frames that include virtual content overlaid on the view of the real environment, and the rendered frames may be provided to the display system. In some embodiments, input from the eye tracking camera 820 may be used in a PCCR gaze tracking process executed by the controller 860 to track the gaze/pose of the user's eyes for use in rendering the augmented or mixed reality content for display. In addition, one or more of the methods as illustrated in FIGS. 1 through 7 may be implemented in the HMD.

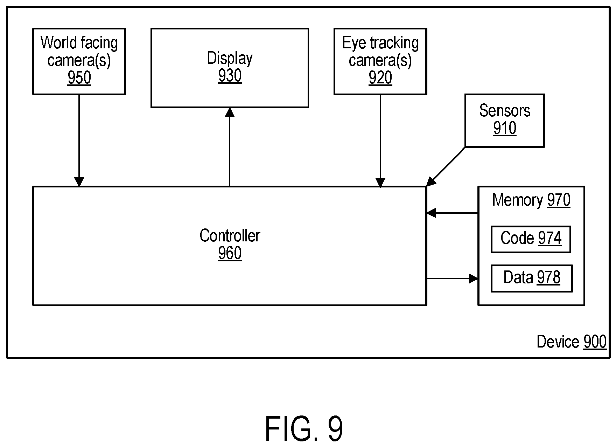

FIG. 9 is a block diagram illustrating an example device that may include components and implement methods as illustrated in FIGS. 1 through 8, according to some embodiments.

In some embodiments, an XR system may include a device 900 such as a headset, helmet, goggles, or glasses. Device 900 may implement any of various types of display technologies. For example, device 900 may include a transparent or translucent display 930 (e.g., eyeglass lenses) through which the user may view the real environment and a medium integrated with display 930 through which light representative of virtual images is directed to the wearer's eyes to provide an augmented view of reality to the wearer.

In some embodiments, device 900 may include a controller 960 configured to implement functionality of the XR system and to generate frames (each frame including a left and right image) that are provided to display 930. In some embodiments, device 900 may also include memory 970 configured to store software (code 974) of the XR system that is executable by the controller 960, as well as data 978 that may be used by the XR system when executing on the controller 960. In some embodiments, memory 970 may also be used to store video captured by camera 950. In some embodiments, device 900 may also include one or more interfaces (e.g., a Bluetooth technology interface, USB interface, etc.) configured to communicate with an external device (not shown) via a wired or wireless connection. In some embodiments, at least a part of the functionality described for the controller 960 may be implemented by the external device. The external device may be or may include any type of computing system or computing device, such as a desktop computer, notebook or laptop computer, pad or tablet device, smartphone, hand-held computing device, game controller, game system, and so on.

In various embodiments, controller 960 may be a uniprocessor system including one processor, or a multiprocessor system including several processors (e.g., two, four, eight, or another suitable number). Controller 960 may include central processing units (CPUs) configured to implement any suitable instruction set architecture, and may be configured to execute instructions defined in that instruction set architecture. For example, in various embodiments controller 960 may include general-purpose or embedded processors implementing any of a variety of instruction set architectures (ISAs), such as the x86, PowerPC, SPARC, RISC, or MIPS ISAs, or any other suitable ISA. In multiprocessor systems, each of the processors may commonly, but not necessarily, implement the same ISA. Controller 960 may employ any micro architecture, including scalar, superscalar, pipelined, superpipelined, out of order, in order, speculative, non-speculative, etc., or combinations thereof. Controller 960 may include circuitry to implement microcoding techniques. Controller 960 may include one or more processing cores each configured to execute instructions. Controller 960 may include one or more levels of caches, which may employ any size and any configuration (set associative, direct mapped, etc.). In some embodiments, controller 960 may include at least one graphics processing unit (GPU), which may include any suitable graphics processing circuitry. Generally, a GPU may be configured to render objects to be displayed into a frame buffer (e.g., one that includes pixel data for an entire frame). A GPU may include one or more graphics processors that may execute graphics software to perform a part or all of the graphics operation, or hardware acceleration of certain graphics operations. In some embodiments, controller 960 may include one or more other components for processing and rendering video and/or images, for example image signal processors (ISPs), coder/decoders (codecs), etc.

Memory 970 may include any type of memory, such as dynamic random access memory (DRAM), synchronous DRAM (SDRAM), double data rate (DDR, DDR2, DDR3, etc.) SDRAM (including mobile versions of the SDRAMs such as mDDR3, etc., or low power versions of the SDRAMs such as LPDDR2, etc.), RAMBUS DRAM (RDRAM), static RAM (SRAM), etc. In some embodiments, one or more memory devices may be coupled onto a circuit board to form memory modules such as single inline memory modules (SIMMs), dual inline memory modules (DIMMs), etc. Alternatively, the devices may be mounted with an integrated circuit implementing system in a chip-on-chip configuration, a package-on-package configuration, or a multi-chip module configuration. In some embodiments DRAM may be used as temporary storage of images or video for processing, but other storage options may be used to store processed data, such as Flash or other "hard drive" technologies.

In some embodiments, device 900 may include one or more sensors 910 that collect information about the user's environment (video, depth information, lighting information, head motion and pose information etc.). The sensors 910 may provide the information to the controller 960 of the XR system. In some embodiments, the sensors 910 may include, but are not limited to, at least one visible light camera (e.g., an RGB video camera) 950, ambient light sensors, an IMU (inertial measurement unit), and at least one eye tracking camera 920. In some embodiments, device 900 may also include one or more IR light sources; light from the light sources reflected off the eye may be captured by the eye tracking camera 920. Gaze tracking algorithms implemented by controller 960 may process images or video of the eye captured by the camera 920 to determine eye pose and gaze direction. In addition, one or more of the methods as illustrated in FIGS. 1 through 7 may be implemented in device 900 to implement insertion of content into a multi-layer image rendering.

In some embodiments, device 900 may be configured to render and display frames to provide an augmented or mixed reality (MR) view for the user based at least in part according to sensor inputs, including input from the eye tracking camera 920. The MR view may include renderings of the user's environment, including renderings of real objects in the user's environment, based on video captured by one or more video cameras that capture high-quality, high-resolution video of the user's environment for display. The MR view may also include virtual content (e.g., virtual objects, virtual tags for real objects, avatars of the user, etc.) generated by the XR system and composited with the displayed view of the user's real environment.

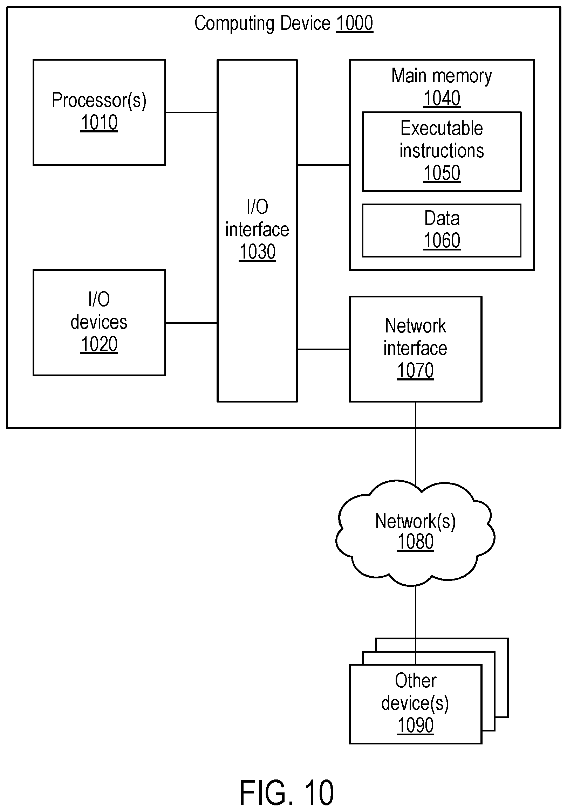

FIG. 10 is a block diagram illustrating an example computing device that may be used, according to some embodiments.

In at least some embodiments, a computing device that implements a portion or all of one or more of the techniques described herein may include a general-purpose computer system that includes or is configured to access one or more computer-accessible media. FIG. 10 illustrates such a general-purpose computing device 1000. In the illustrated embodiment, computing device 1000 includes one or more processors 1010 coupled to a main memory 1040 (which may comprise both non-volatile and volatile memory modules and may also be referred to as system memory) via an input/output (I/O) interface 1030. Computing device 1000 further includes a network interface 1070 coupled to I/O interface 1030, as well as additional I/O devices 1020 which may include sensors of various types.

In various embodiments, computing device 1000 may be a uniprocessor system including one processor 1010, or a multiprocessor system including several processors 1010 (e.g., two, four, eight, or another suitable number). Processors 1010 may be any suitable processors capable of executing instructions. For example, in various embodiments, processors 1010 may be general-purpose or embedded processors implementing any of a variety of instruction set architectures (ISAs), such as the x86, PowerPC, SPARC, or MIPS ISAs, or any other suitable ISA. In multiprocessor systems, each of processors 1010 may commonly, but not necessarily, implement the same ISA. In some implementations, graphics processing units (GPUs) may be used instead of, or in addition to, conventional processors.

Memory 1040 may be configured to store instructions and data accessible by processor(s) 1010. In at least some embodiments, the memory 1040 may comprise both volatile and non-volatile portions; in other embodiments, only volatile memory may be used. In various embodiments, the volatile portion of system memory 1040 may be implemented using any suitable memory technology, such as static random-access memory (SRAM), synchronous dynamic RAM or any other type of memory. For the non-volatile portion of system memory (which may comprise one or more NVDIMMs, for example), in some embodiments flash-based memory devices, including NAND-flash devices, may be used. In at least some embodiments, the non-volatile portion of the system memory may include a power source, such as a supercapacitor or other power storage device (e.g., a battery). In various embodiments, memristor based resistive random-access memory (ReRAM), three-dimensional NAND technologies, Ferroelectric RAM, magnetoresistive RAM (MRAM), or any of various types of phase change memory (PCM) may be used at least for the non-volatile portion of system memory. In the illustrated embodiment, executable program instructions 1050 and data 1060 implementing one or more desired functions, such as those methods, techniques, and data described above, are shown stored within main memory 1040.

In one embodiment, I/O interface 1030 may be configured to coordinate I/O traffic between processor 1010, main memory 1040, and various peripheral devices, including network interface 1070 or other peripheral interfaces such as various types of persistent and/or volatile storage devices, sensor devices, etc. In some embodiments, I/O interface 1030 may perform any necessary protocol, timing, or other data transformations to convert data signals from one component (e.g., main memory 1040) into a format suitable for use by another component (e.g., processor 1010). In some embodiments, I/O interface 1030 may include support for devices attached through various types of peripheral buses, such as a variant of the Peripheral Component Interconnect (PCI) bus standard or the Universal Serial Bus (USB) standard, for example. In some embodiments, the function of I/O interface 1030 may be split into two or more separate components, such as a north bridge and a south bridge, for example. Also, in some embodiments some or all of the functionality of I/O interface 1030, such as an interface to memory 1040, may be incorporated directly into processor 1010.

Network interface 1070 may be configured to allow data to be exchanged between computing device 1000 and other devices 1090 attached to a network or networks 1080, such as other computer systems or devices. In various embodiments, network interface 1070 may support communication via any suitable wired or wireless general data networks, such as types of Ethernet network, for example. Additionally, network interface 1070 may support communication via telecommunications/telephony networks such as analog voice networks or digital fiber communications networks, via storage area networks such as Fibre Channel SANs, or via any other suitable type of network and/or protocol.

In some embodiments, main memory 1040 may be one embodiment of a computer-accessible medium configured to store program instructions and data as described above for FIG. 1 through FIG. 11 for implementing embodiments of the corresponding methods and apparatus. However, in other embodiments, program instructions and/or data may be received, sent, or stored upon different types of computer-accessible media. Generally speaking, a computer-accessible medium may include non-transitory storage media or memory media such as magnetic or optical media, e.g., disk or DVD/CD coupled to computing device 1000 via I/O interface 1030. A non-transitory computer-accessible storage medium may also include any volatile or non-volatile media such as RAM (e.g., SDRAM, DDR SDRAM, RDRAM, SRAM, etc.), ROM, etc., that may be included in some embodiments of computing device 1000 as main memory 1040 or another type of memory. Further, a computer-accessible medium may include transmission media or signals such as electrical, electromagnetic, or digital signals, conveyed via a communication medium such as a network and/or a wireless link, such as may be implemented via network interface 1070. Portions or all of multiple computing devices such as that illustrated in FIG. 10 may be used to implement the described functionality in various embodiments; for example, software components running on a variety of different devices and servers may collaborate to provide the functionality. In some embodiments, portions of the described functionality may be implemented using storage devices, network devices, or special-purpose computer systems, in addition to or instead of being implemented using general-purpose computer systems. The term "computing device," as used herein, refers to at least all these types of devices, and is not limited to these types of devices.

Exemplary non-transitory computer-readable media, methods, and devices are set out in the following items.
1. One or more non-transitory, computer readable media storing program instructions that, when executed using one or more processors, cause the one or more processors to:
   access a multi-layer image;
   access content to be inserted in the multi-layer image;
   render a first depth portion of the multi-layer image;
   render the content to be inserted in the multi-layer image;
   render a second depth portion of the multi-layer image; and
   composite the first rendered depth portion with the rendered content and the second rendered depth portion, wherein the first or second depth portion occludes a portion of the inserted content, and wherein an amount of occlusion of the inserted content depends on a viewpoint from which the multi-layer image is being rendered with the inserted content.
2. The one or more non-transitory, computer-readable media of item 1, wherein:
   the first depth portion comprises a background of the multi-layer image;
   the second depth portion comprises a foreground of the multi-layer image;
   the rendered content is inserted between the foreground and the background; foreground objects at least partially occlude the rendered content inserted between the foreground and the background; and
   the rendered content inserted between the foreground and the background at least partially occludes one or more background objects.
3. The one or more non-transitory, computer-readable media of item 1 or 2, wherein the content to be inserted is a two-dimensional (2D) image.
4. The one or more non-transitory, computer-readable media of any preceding item, wherein:
   the multi-layer image is static for a plurality of moments in time; and
   the content to be inserted dynamically changes over the plurality of moments in time.
5. The one or more non-transitory, computer-readable media of any preceding item, wherein the content to be inserted is a three-dimensional (3D) image.
6. The one or more non-transitory, computer-readable media of any preceding item, wherein the program instructions, when executed using the one or more processors, cause the one or more processors to:
   determine a first set of layers of the multi-layer image to include in a foreground rendering; and
   determine a second set of layers of the multi-layer image to include in a background rendering, optionally:
      wherein the set of layers included in the foreground rendering are located at depths less than a depth where the content is to be inserted, and
      wherein the set of layers included in the background rendering are located at depths greater than the depth where the content is to be inserted.
7. The one or more non-transitory, computer-readable media of any preceding item, wherein:
   rendering the first depth portion of the multi-layer image comprises rendering a first portion of a set of triangles to be included in a rendered view of the multi-layer image;
   rendering the second depth portion of the multi-layer image comprises rendering a second portion of the set of triangles to be included in a rendered view of the multi-layer image.
8. The one or more non-transitory, computer-readable media of any preceding item, wherein: the first depth portion and the second depth portion are rendered with a mask that masks where the inserted content is to be placed in a rendered view of the multi-layer image.
9. A method comprising:
   accessing a multi-layer image;
   accessing content to be inserted in the multi-layer image; and
   compositing the content into a rendered version of the multi-layer image, wherein a first or a second depth portion of the rendered version of the multi-layer image occludes a portion of the inserted content, and wherein an amount of occlusion of the inserted content depends on a viewpoint from which the multi-layer image is being rendered with the inserted content.
10. The method of item 9, wherein:
   the first depth portion comprises a background of the multi-layer image;
   the second depth portion comprises a foreground of the multi-layer image;
   the inserted content is inserted between the foreground and the background;
   foreground objects at least partially occlude the inserted content inserted between the foreground and the background; and
   the inserted content inserted between the foreground and the background at least partially occludes one or more background objects.
11. The method of item 9 or 10, further comprising:
   rendering a first depth portion of the multi-layer image;
   rendering the content to be inserted in the multi-layer image; and
   rendering a second depth portion of the multi-layer image,
   wherein said compositing comprises compositing the first rendered depth portion with the rendered content and the second rendered depth portion.
12. The method of any of items 9-11, further comprising:
   modifying one or more existing layers of the multi-layer image to include the content to be inserted in the multi-layer image,
   wherein said compositing comprises compositing the layers of the multi-layer image including the one or more existing layers that have been modified to in the content to be inserted in the multi-layer image.
13. The method of any of items 9-12, further comprising:
   inserting one or more additional layers between existing layers of the multi-layer content, wherein the one or more additional layers comprise the content to be inserted into the multi-layer image,
   wherein said compositing comprises compositing the existing and additional layers of the multi-layer image.
14. The method of any of items 9-13, wherein:
   the multi-layer image is static for a plurality of moments in time; and
   the content to be inserted dynamically changes over the plurality of moments in time.
15. The method of any of items 9-14, wherein the content to be inserted is a three-dimensional (3D) image.
16. A device, comprising:
   a memory storing program instructions; and
   one or more processors, wherein the program instructions, when executed using the one or more processors, cause the one or more processors to:
      access a multi-layer image;
      access content to be inserted in the multi-layer image; and
      composite the content into a rendered version of the multi-layer image, wherein a first or a second depth portion of the rendered version of the multi-layer image occludes a portion of the inserted content, and wherein an amount of occlusion of the inserted content depends on a viewpoint from which the multi-layer image is being rendered with the inserted content.
17. The device of item 16, wherein:
   the first depth portion comprises a background of the multi-layer image;
   the second depth portion comprises a foreground of the multi-layer image;
   the inserted content is inserted between the foreground and the background;
   foreground objects at least partially occlude the inserted content inserted between the foreground and the background; and
   the inserted content inserted between the foreground and the background at least partially occludes one or more background objects.
18. The device of item 16 or 17, wherein the program instructions, when executed using the one or more processors, further cause the one or more processors to:
   render a first depth portion of the multi-layer image;
   render the content to be inserted in the multi-layer image; and
   render a second depth portion of the multi-layer image,
   wherein said compositing comprises compositing the first rendered depth portion with the rendered content and the second rendered depth portion.
19. The device of any of items 16-18, wherein the program instructions, when executed using the one or more processors, further cause the one or more processors to:
   modify one or more existing layers of the multi-layer image to include the content to be inserted in the multi-layer image,
   wherein said compositing comprises compositing the layers of the multi-layer image including the one or more existing layers that have been modified to in the content to be inserted in the multi-layer image.
20. The device of any of items 16-19, wherein the program instructions, when executed using the one or more processors, further cause the one or more processors to:
   insert one or more additional layers between existing layers of the multi-layer content, wherein the one or more additional layers comprise the content to be inserted into the multi-layer image,
   wherein said compositing comprises compositing the existing and additional layers of the multi-layer image.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. One or more non-transitory, computer readable media storing program instructions that, when executed using one or more processors, cause the one or more processors to:
access a multi-layer image;
access content to be inserted in the multi-layer image;
render a first depth portion of the multi-layer image;
render the content to be inserted in the multi-layer image;
render a second depth portion of the multi-layer image; and
composite the first rendered depth portion with the rendered content and the second rendered depth portion, wherein the first or second depth portion occludes a portion of the inserted content, and wherein an amount of occlusion of the inserted content depends on a viewpoint from which the multi-layer image is being rendered with the inserted content.

2. The one or more non-transitory, computer-readable media of claim 1, wherein:
the first depth portion comprises a background of the multi-layer image;
the second depth portion comprises a foreground of the multi-layer image;
the rendered content is inserted between the foreground and the background;
foreground objects at least partially occlude the rendered content inserted between the foreground and the background; and
the rendered content inserted between the foreground and the background at least partially occludes one or more background objects.

3. The one or more non-transitory, computer-readable media of claim 1 or 2, wherein the content to be inserted is a two-dimensional (2D) image.

4. The one or more non-transitory, computer-readable media of any of claims 1-3, wherein:
the multi-layer image is static for a plurality of moments in time; and
the content to be inserted dynamically changes over the plurality of moments in time.

5. The one or more non-transitory, computer-readable media of any of claims 1-4, wherein the content to be inserted is a three-dimensional (3D) image.

6. The one or more non-transitory, computer-readable media of any of claims 1-5, wherein the program instructions, when executed using the one or more processors, cause the one or more processors to:
determine a first set of layers of the multi-layer image to include in a foreground rendering; and
determine a second set of layers of the multi-layer image to include in a background rendering,
wherein the set of layers included in the foreground rendering are located at depths less than a depth where the content is to be inserted, and
wherein the set of layers included in the background rendering are located at depths greater than the depth where the content is to be inserted.

7. The one or more non-transitory, computer-readable media of any of claims 1-6, wherein:
rendering the first depth portion of the multi-layer image comprises rendering a first portion of a set of triangles to be included in a rendered view of the multi-layer image;
rendering the second depth portion of the multi-layer image comprises rendering a second portion of the set of triangles to be included in a rendered view of the multi-layer image.

8. The one or more non-transitory, computer-readable media of any of claims 1-7, wherein:
the first depth portion and the second depth portion are rendered with a mask that masks where the inserted content is to be placed in a rendered view of the multi-layer image.

9. A method comprising:
accessing a multi-layer image;
accessing content to be inserted in the multi-layer image; and
compositing the content into a rendered version of the multi-layer image, wherein a first or a second depth portion of the rendered version of the multi-layer image occludes a portion of the inserted content, and wherein an amount of occlusion of the inserted content depends on a viewpoint from which the multi-layer image is being rendered with the inserted content.

10. The method of claim 9, wherein:
the first depth portion comprises a background of the multi-layer image;
the second depth portion comprises a foreground of the multi-layer image;
the inserted content is inserted between the foreground and the background;
foreground objects at least partially occlude the inserted content inserted between the foreground and the background; and
the inserted content inserted between the foreground and the background at least partially occludes one or more background objects.

11. The method of claim 9 or 10, further comprising:
rendering a first depth portion of the multi-layer image;
rendering the content to be inserted in the multi-layer image; and
rendering a second depth portion of the multi-layer image,
wherein said compositing comprises compositing the first rendered depth portion with the rendered content and the second rendered depth portion.

12. The method of any of claims 9-11, further comprising:
modifying one or more existing layers of the multi-layer image to include the content to be inserted in the multi-layer image,
wherein said compositing comprises compositing the layers of the multi-layer image including the one or more existing layers that have been modified to in the content to be inserted in the multi-layer image.

13. The method of any of claims 9-12, further comprising:
inserting one or more additional layers between existing layers of the multi-layer content, wherein the one or more additional layers comprise the content to be inserted into the multi-layer image,
wherein said compositing comprises compositing the existing and additional layers of the multi-layer image.

14. The method of any of claims 9-13, wherein:
the multi-layer image is static for a plurality of moments in time; and
the content to be inserted dynamically changes over the plurality of moments in time.

15. The method of any of claims 9-14, wherein the content to be inserted is a three-dimensional (3D) image.
